# EUROPEAN PATENT APPLICATION

(11) **EP 4 439 963 A1**
(43) Date of publication of application: **02.10.2024**
(21) Application number: 23165758.6
(22) Date of filing: 31.03.2023
(51) Int. Cl.: H02M 7/483, H02M 1/32, H02M 1/36, H02M 1/08, H02M 1/00

(54) **A METHOD FOR STARTING UP A PLURALITY OF SERIES CONNECTED CELLS OF A CONVERTER**

(71) Applicant: Hitachi Energy Ltd, 8050 Zürich (CH)
(72) Inventor: Vinnberg, Andreas, 771 32 Ludvika (SE)
(74) Representative: AWA Sweden AB

(57) **Abstract**

The present disclosure relates to a method for starting up a plurality of series connected cells (102) of a converter, wherein each cell of the plurality of series connected cells comprises first and second power electronic switches (113, 114) in a half-bridge arrangement, a chargeable element (115), a first gate drive unit (117) connected with the first power electronic switch, and a second gate drive unit (118) connected with the second power electronic switch. The method comprises:
receiving a main voltage at the plurality of series connected cells from an external voltage source, the main voltage thereby being distributed between the cells and charging the chargeable elements of the cells;
energizing, in each cell, the first gate unit;
temporarily switching, in at least one of the cells but fewer than all cells, the first power electronic switch to thereby bypass the cell;
energizing, when a cell voltage in a cell of the plurality of cells reaches a full-operation voltage level, the second gate unit in that cell; and
changing which cells have the first electronic switch temporarily switched to bypass the cell until the second gate units in all cells have been energized.

## Description

### TECHNICAL FIELD

The present disclosure generally relates to converters. In particular, the present disclosure relates to a method for starting up a plurality of series connected cells of a converter.

### BACKGROUND

A converter, for instance a modular multilevel converter (MMC), typically includes one or more converter arms having several series connected cells each. Each cell includes several semiconductor devices, such as e.g. IGBT switches and/or other switching devices, a chargeable element, such as a cell capacitor, along with control devices, such as e.g. control boards for controlling the cell and communicating with central control units, gate drive units (GDUs) controlling the switches, etc. In different converter configurations or applications, there may be different initial cell voltages, however, in any case the cell voltage needs to exceed a lower limit to start up the cell. In some situations, the main voltage applied to the converter and distributed among the cells is too low to reach the lower limit of the cell voltage, which makes it not possible to start the operation of the converter.

### SUMMARY

The present disclosure seeks to at least partly remedy the above discussed issues. To achieve this, a method for starting up a plurality of series connected cells of a converter and an arrangement of a plurality of series connected cells of a converter, as defined by the independent claims, are provided. Further embodiments are provided in the dependent claims.

According to an aspect of the present disclosure, there is provided a method for starting up a plurality of series connected cells of a converter, wherein each cell of the plurality of series connected cells comprises first and second power electronic switches in a half-bridge arrangement, a chargeable element, a first gate drive unit connected with the first power electronic switch, and a second gate drive unit connected with the second power electronic switch. The method comprises:
receiving a main voltage at the plurality of series connected cells from an external voltage source, the main voltage thereby being distributed between the cells and charging the chargeable elements of the cells;
energizing, in each cell, the first gate unit;
temporarily switching, in at least one of the cells but fewer than all cells, the first power electronic switch to thereby bypass the cell;
energizing, when a cell voltage in a cell of the plurality of cells reaches a full-operation voltage level, the second gate unit in that cell; and
changing which cells have the first electronic switch temporarily switched until the second gate units in all cells have been energized.

By bypassing some of the cells, the cell voltage of other cells will increase, which in turn leads to an increased voltage of the chargeable element. Thereby, it is possible to reach a high enough voltage to start up those cells. By changing which cells are bypassed, eventually all cells will be up and running and the converter will become fully operative.

According to an embodiment of the method, the operation of energizing the first gate unit is performed when the cell voltage reaches a sub-operation voltage level, which is lower than the full-operation voltage level. Thereby, it is ensured that the switching of the first electronic switch is enabled in spite of a too low main voltage to start up all cells in common.

According to an embodiment of the method, when each cell comprises two main terminals and an external bypass switch arranged between the main terminals, the method further comprises detecting a short-circuit in the second power electronic switch of a cell, and closing the external bypass switch.

According to an embodiment of the method, the closing of the external bypass switch comprises powering a bypass trigger by means of the first gate unit, wherein the bypass trigger switches the external bypass switch to a closed position.

According to another aspect of the present disclosure, there is provided a converter comprising a valve control unit and several valves, each comprising a plurality of series connected cells. Each cell of the plurality of series connected cells comprises first and second power electronic switches in a half-bridge arrangement, a chargeable element, a first gate drive unit connected with the first power electronic switch, a second gate drive unit connected with the second power electronic switch, and control circuitry. The converter is configured to perform a start-up procedure during which:
the control circuitry of each cell of the plurality of series connected cells is configured to initially energize merely the first gate unit,
in at least one of the cells but fewer than all cells, the first power electronic switch is temporarily switched to thereby bypass the cell,
in each cell where a cell voltage reaches a full-operation voltage level, the second gate unit in that cell is energized,
the cells which have the first electronic switch temporarily switched are changed until the second gate units in all cells have been energized.

The arrangement provides similar advantages as the above method. The arrangement can be comprised in different types of converters, such as modular multilevel converters, non-modular converters, etc., where the above-defined structure of cell arrangement is provided.

According to an embodiment of the arrangement, each cell comprises an external bypass switch. For instance, the external bypass switch may be a sacrificial mechanical or semiconductor switch, or a multiple use vacuum switch.

According to an embodiment of the arrangement, the control circuitry is configured to energize the first gate unit when the cell voltage reaches a sub-operation voltage level, which is lower than the full-operation voltage level.

According to an embodiment of the arrangement, the plurality of cells constitutes an arm of the converter.

### BRIEF DESCRIPTION OF THE DRAWINGS

Exemplifying emodiments of the present disclosure will be described below with reference to the accompanying drawings, in which:
Figure 1 is a block diagram of an embodiment of a modular multilevel converter according to the present disclosure;
Figure 2 is a block diagram of a cell structure comprised in the modular multilevel converter; and
Figure 3 is a flow chart of an embodiment of the method according to the present disclosure.

### DETAILED DESCRIPTION

The present disclosure will be described hereinafter with reference to the accompanying drawings, in which exemplifying embodiments are shown. The present disclosure should however not be construed as limited to the embodiments set forth herein; rather, these embodiments are provided by way of example so that this description will convey the scope of the present disclosure to those skilled in the art.

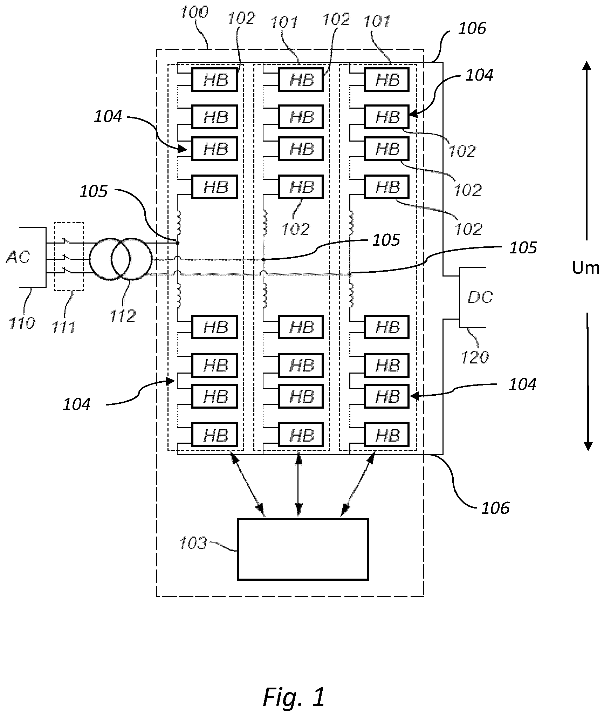

As shown in figure 1, an exemplifying structure of a converter, and more particularly a modular multi-level converter (MMC) 100, comprises converter valves 101, such as three converter valves 101, one converter valve per AC phase. Each converter valve 101 has a plurality of interconnected cells 102, also called submodules. The MMC 100 is connectable, on one side thereof, to an AC power supply 110, such as an AC grid or some other feasible AC power supply, typically via an AC breaker 111 and a transformer 112 and, on the other side thereof, to a DC system 120, such as an HVDC system or any other feasible DC system. The MMC 100 further comprises a valve control unit, VCU, 103 connected to the converter valves 101. The VCU 103, in turn, may be connected to a higher-level control device external of the MMC 100. The higher-level control device may be responsible for controlling the overall operation of the MMC 100, as well as further MMCs. Each converter valve 101 comprises two valve arms 104, respectively connected between an AC phase terminal 105 and a respective DC terminal 106, such as a positive pole and a negative pole of the DC system 120. Each arm 104 comprises a plurality of series connected cells 102. The valve can be delimited in different ways than shown in figure 1. For instance, the valve can constitute one arm 104, or, in particular when the arm comprises a large number of cells, a part of an arm. Therefore, herein the term valve is generally defined as a plurality of series connected cells 102.

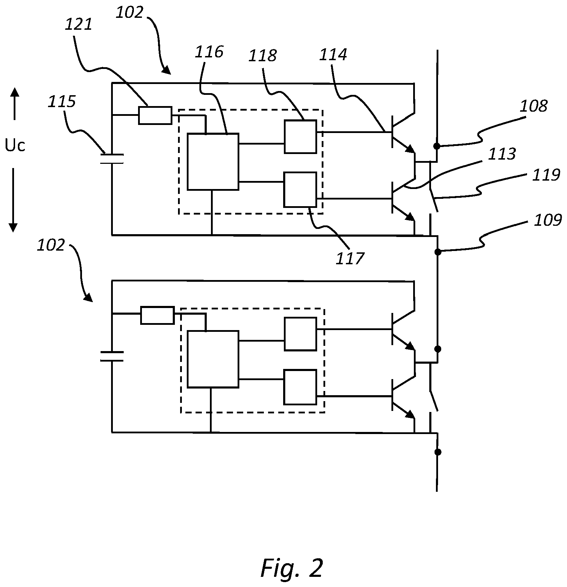

The cells 102 are half-bridge, HB, cells. Referring additionally to figure 2, each cell 102 comprises first and second cell terminals 108, 109, first and second power electronic switches 113, 114 in half-bridge arrangement, a chargeable element 115, such as a capacitor, control circuitry, which is here implemented as an individual control device 116, and first and second gate drive units, GU, 117, 118. The first power electronic switch 113 is connected between the first and second cell terminals 108, 109. The second power electronic switch 114 is connected to the first cell terminal 108 and to a first connection of the chargeable element 115. The other connection of the chargeable element 115 is connected with the second cell terminal 109. As understood by the person skilled in the art, the chargeable element can be some other kind of suitable chargeable element, such as a particular type of capacitor called supercapacitor or a battery. Further, it should be noted that the control circuitry, here shown as an individual control device 116, may alternatively be integrated with the first and second gate drive units 117, 118, and even all three those parts may be implemented as a single unit, as indicated with the broken line box in figure 2. The control device 116 is connected to the second cell terminal 109 and to the first connection of the chargeable element 115, either directly or, as shown in figure 2, via a resistor or fuse 121. The first GU 117 is connected to the first power electronic switch 113 and to the control device 116. The second GU 118 is connected to the second power electronic switch 114 and to the control device 116. The first and second GUs 117, 118 are configured to control the switching of the respective power electronic switch 113, 114. The power electronic switches 113, 114 may be, for example, a Bi-mode Insulated Gate Transistor, BIGT, a combination of an Insulated Gate Bipolar Transistor, IGBT, and a freewheeling diode, an integrated gate-commutated thyristor (IGCT), a MOSFET, etc. The control device 116 is configured to communicate with higher level control units, external of the cell, for instance the valve control unit 103. Furthermore, each cell 102 may comprise an external bypass switch 119 connected between the first and second cell terminals 108, 109. It should be noted that in figures 1 and 2 the structures of the MMC and the cells are most schematically illustrated and mere examples, since the structures as such are known to the person skilled in the art. Other structures can be used as well, as long as they are capable of being configured to operate as will be described below.

According to an embodiment, the modular multilevel converter 100 is configured to perform a start-up procedure during which: the control device 116 of each cell 102 is configured to initially energize merely the first gate unit 117; the valve control unit 103 is configured to command the control devices 116 of at least one of the cells 102 but fewer than all cells 102 in each valve 101 to temporarily close the first power electronic switch 113 to thereby bypass the cell 102; the control device 116 of each cell 102 is configured to energize the second gate unit 118 when a cell voltage reaches a full-operation voltage level in the cell 102; and the valve control unit 103 is configured to, in each valve 101, change the cells 102 which have the first electronic switch 113 temporarily closed until the second gate units 118 of all cells 102 of the valve 101 have been energized.

More particularly, when a main voltage is applied to the MMC 100, the chargeable element 115 of each cell 102 is energized and starts charging, due to the freewheeling diode function of the power electronic switches 113, 114, which is either an integral function of the power electronic switch or a separate diode depending on the type of power electronic switch. The control device 116 of each cell 102 of the MMC 100 is configured to initially energize merely the first gate unit 117. This is because energizing both the first and the second gate unit 117, 118 requires a higher cell voltage, here called full-operation voltage level, than just energizing the first gate unit 117. In cases where the main voltage is too low to support all cells 102 to be charged up to the full-operation voltage level, it may still be enough to support all cells 102 to be charged up to a voltage level, here called sub-operation voltage level, that is at least equal to the sub-operation voltage level. A factor that in practise affects the voltage levels is the varying properties of components of the cell. For instance, there is a production spread of the capacitance value of the capacitor used as the chargeable element 115. As a practical example, and as a mere illustration, the sub-operation voltage level can be about 10% below the full-operation voltage level or even lower. Then, as mentioned above, the valve control unit 103 controls some of the cells 102 to be bypassed by commanding the control devices 116 of those cells 102 to close the first power electronic switches 113. Advantageously, the valve control unit 103 will first bypass those cells having the highest voltage. Thereby, the main voltage is distributed among fewer cells 102 enabling them to charge the chargeable element 115 to a higher voltage, on or above the full-operation voltage level. In other words, they become bootstrapped. In turn, this enables the control devices 116 of those remaining cells 102, not being bypassed, to energize also the second gate unit 118, and thereby the starting up of those cells has been completed and they are in full operation. By then switching the first power electronic switches 113 of the bypassed cells 102 back to the open state, and bypassing other cells 102, for example those now being in full operation, in one or more sequences, eventually all of the cells 102 have been bootstrapped and, thus, started up.

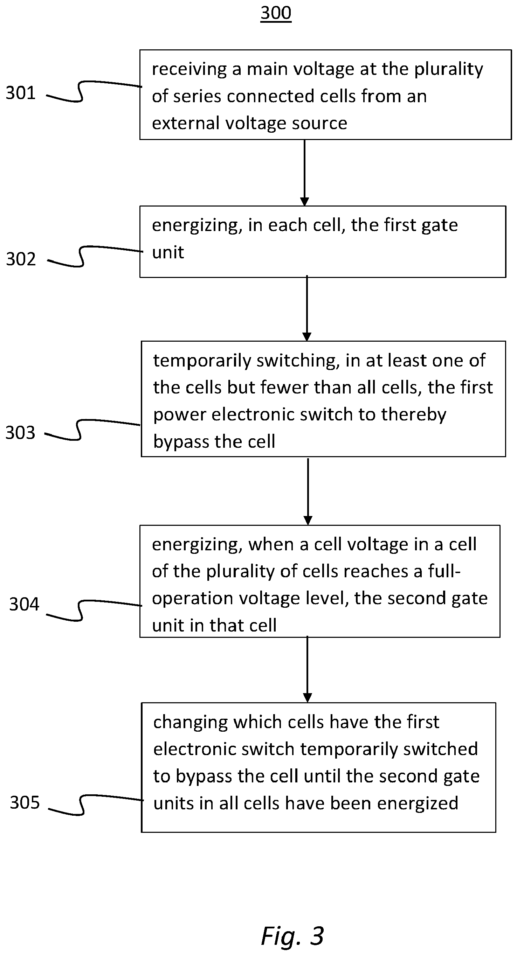

As shown in figure 3, an embodiment of the present method 300 comprises a number of operations beginning with receiving a main voltage Um at the plurality of series connected cells 102 from an external voltage source, in box 301. Thereby, the main voltage Um is distributed between the cells 102 and the charging of the chargeable elements 115 of the cells 102 starts. The method further comprises, in box 302, energizing, in each cell 102, the control device 116 and the first gate unit 117. The energizing of the first gate unit 117 may be conditioned by the cell voltage Uc, which is also approximately the voltage across the chargeable element 115, reaches a sub-operation voltage level. Thereby, it is possible to switch the first power electronic switch 113 of each cell 102. Next operation is temporarily switching, in at least one of the cells 102 but fewer than all cells 102, the first power electronic switch to thereby bypass the cell, box 303. By bypassing a suitable, or large enough, number of cells 102, the non-bypassed cells 102 are thereby bootstrapped to a higher voltage enabling energizing the second gate unit 118 when the cell voltage Uc reaches the full-operation voltage level, box 304. The method further comprises changing which cells 102 have the first electronic switch 113 temporarily switched to bypass the cell 102 until the second gate units 118 in all cells have been energized, box 305. The ordinary operation of the modular multilevel converter 100 may then begin, involving switching both the first power electronic switch 117 and the second power electronic switch 118 depending on whether the cells 102 are controlled to, for example, charge, discharge or being bypassed.

If a faulty situation occurs, such as if the second gate unit 118 is not started although the cell voltage Uc is high enough, the cause may be that the second power electronic switch 114 is short-circuited. The condition can be detected, for example, by means of measuring the cell voltage Uc and the voltage across the first power electronic switch 113 to determine the voltage across the second power electronic switch 114. If it is determined that the second power electronic switch 114 is short-circuited, then the external bypass switch 119 can be closed by supplying power to a bypass trigger (not shown as such) from the first gate unit 117. The bypass trigger, in turn, closes the external bypass switch 119.

While the present disclosure has been illustrated and described in detail in the drawings and foregoing description, such illustration and description are to be considered illustrative or exemplary and not restrictive.

Although features and elements are described above in particular combinations, each feature or element can be used alone without the other features and elements or in various combinations with or without other features and elements.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain features are recited in mutually different dependent claims does not indicate that a combination of these features cannot be used to advantage. Any reference signs in the claims should not be construed as limiting the scope.

## Claims

1. A method for starting up a plurality of series connected cells (102) of a converter (100), wherein each cell of the plurality of series connected cells comprises first and second power electronic switches (113, 114) in a half-bridge arrangement, a chargeable element (115), a first gate drive unit (117) connected with the first power electronic switch, and a second gate drive unit (118) connected with the second power electronic switch, the method comprising:
receiving a main voltage at the plurality of series connected cells from an external voltage source, the main voltage thereby being distributed between the cells and charging the chargeable elements of the cells;
energizing, in each cell, the first gate unit;
temporarily switching, in at least one of the cells but fewer than all cells, the first power electronic switch to thereby bypass the cell;
energizing, when a cell voltage in a cell of the plurality of cells reaches a full-operation voltage level, the second gate unit in that cell; and
changing which cells have the first electronic switch temporarily switched to bypass the cell until the second gate units in all cells have been energized.

2. The method according to claim 1, wherein the operation of energizing the first gate unit is performed when the cell voltage reaches a sub-operation voltage level, which is lower than the full-operation voltage level.

3. The method according to claim 1 or 2, wherein each cell comprises two main terminals, and an external bypass switch arranged between the main terminals, the method further comprising:
detecting a short-circuit in the second power electronic switch of a cell; and
closing the external bypass switch.

4. The method according to claim 3, wherein the closing of the external bypass switch comprises powering a bypass trigger by means of the first gate unit, the bypass trigger thereby switching the external bypass switch to a closed position.

5. A converter (100) comprising a valve control unit (103) and several valves (101), each comprising a plurality of series connected cells (102), wherein each cell of the plurality of series connected cells comprises first and second power electronic switches (113, 114) in a half-bridge arrangement, a chargeable element (115), a first gate drive unit (117) connected with the first power electronic switch, a second gate drive unit (118) connected with the second power electronic switch, and control circuitry, wherein the control circuitry of each cell is configured to communicate with the valve control unit, and wherein the converter is configured to perform a start-up procedure during which:
the control circuitry of each cell is configured to initially energize merely the first gate unit,
the valve control unit is configured to command the control circuitry of at least one of the cells but fewer than all cells in each valve to temporarily close the first power electronic switch to thereby bypass the cell,
the control circuitry of each cell is configured to energize the second gate unit when a cell voltage reaches a full-operation voltage level in the cell, and
the valve control unit is configured to, in each valve, change the cells which have the first electronic switch temporarily closed until the second gate units of all cells of the valve have been energized.

6. The converter according to claim 5, wherein each cell comprises an external bypass switch.

7. The converter according to claim 5 or 6, wherein the control circuitry is configured to energize the first gate unit when the cell voltage reaches a sub-operation voltage level, which is lower than the full-operation voltage level.

8. The converter according to any one of claims 5 to 7, wherein each valve constitutes an arm of the converter.
